# EUROPÄISCHE PATENTSCHRIFT

(11) **EP 3 100 803 B1**
(45) Veröffentlichungstag und Bekanntmachung des Hinweises auf die Patenterteilung: **15.07.2020**
(21) Anmeldenummer: 16172430.7
(22) Anmeldetag: 01.06.2016
(51) Int. Cl.: B22F 7/00, B22F 7/04, B32B 5/18, B32B 15/01, B32B 15/04, B32B 15/18, B32B 15/20, F27B 17/00, F27D 3/02, F27D 11/12, F27D 15/02, F27D 5/00, B22F 3/20, B22F 3/24

(54) **VERFAHREN UND VORRICHTUNG ZUR HERSTELLUNG VON METALLSCHAUMVERBUNDKÖRPERN**
METHOD AND APPARATUS FOR MANUFACTURING METAL FOAM COMPOSITE BODIES
PROCÉDÉ ET DISPOSITIF DE FABRICATION DE CORPS COMPOSITES EN MOUSSE MÉTALLIQUE

(30) Priorität: 03.06.2015 DE 102015006879; 31.08.2015 DE 102015114500
(43) Veröffentlichungstag der Anmeldung: 07.12.2016
(73) Patentinhaber: Havel metal foam GmbH, 14774 Brandenburg an der Havel (DE)
(72) Erfinder: Schuller, Friedrich, 97342 Obernbreit (DE)
(74) Vertreter: Grünecker Patent- und Rechtsanwälte PartG mbB

(56) Entgegenhaltungen:
- WO-A2-2014/118722
- CN-B- 102 390 135
- DE-A1-102005 000 774
- KR-A- 20110 018 647
- US-A1- 2013 026 155
- US-B2- 7 514 650
- KNUTH ET AL: "Recyclingfaehiges Material fuer den Leichtbau - Aluminiumschaum", LIGHTWEIGHT DESIGN : DIE FACHZEITSCHRIFT FÜR DEN LEICHTBAU BEWEGTER MASSEN, VIEWEG UND TEUBNER/SPRINGER FACHMEDIEN, DE, Bd. 8, Nr. 3, 1. Juni 2015 (2015-06-01), Seiten 20-25, XP008181543, ISSN: 2192-8738, DOI: 10.1007/S35725-015-0013-5 [gefunden am 2015-05-19]

## Beschreibung

Die Erfindung betrifft ein Verfahren und eine Vorrichtung zur Herstellung von Metallschaumverbundkörpern.

Metallschaumverbundkörper erfreuen sich als Sandwichplatten wegen ihrer hohen strukturellen Festigkeit bei gleichzeitig geringem spezifischen Gewicht großer Beliebtheit, wobei die Deckschichten aus Aluminiumplatten mit einem Metallschaumkern auf Aluminiumbasis (AFS) oder mit Deckschichtplatten aus Stahl mit einem Metallschaumkern auf Aluminium-Basis (SAS) Platten ausgeführt sind. Hauptsächlich werden Metallschaumverbundplatten als AFS (Aluminium-Aluminiumschaum-Aluminium-Sandwiches) und SAS (Stahl-Aluminiumschaum-Stahl-Sandwiches mit metallischer Bindung) unterschieden.

Anwendungsgebiete zeigen sich vorrangig in der Bauindustrie, dem Schienenfahrzeugbau, in der Luft-und Raumfahrt, Architektur, Industriebau, Schiffbau und anderen Wirtschaftszweigen. Derartige Verbundelemente werden als metallurgisch integrale Körper und Metallleichtbauerzeugnisse ohne Zusatzstoffe, wie Kleber, Nieten oder Schrauben, hergestellt, so dass diese Metallschaumverbundkörper auch eine hohe ästhetische Anziehungskraft besitzen.

Allerdings sind diese Bauplatten verhältnismäßig teuer, da sie in individueller Einzelfertigung und ohne ein Anlagenregime, das eine mehrschichtige Auslastung gestattet, hergestellt werden. Üblicherweise wird zur Herstellung der Aluminium-Schaumkörperelemente, die später nach dem temperaturbedingten Aufschäumen den Aluminium-Schaumkörper zwischen den Decklagen der Sandwich-Platte bilden, ein Aluminium-Metallpulver mit einem Treibmittel, z.B. TiH2 vermischt und anschließend mittels eines Presskolbens in einem Axial-Pressformschritt verdichtet. Beim Axial-Pressen wird ein zylindrischer Block aus dem pulvermetallurgischen Schäummaterial durch eine Düse zu einem schäumfähigen Formmaterial verpresst. Anschließend wird das Formmaterial (Halbzeug, Al-Schaumkörperelemente) zum Schäumen in eine Form oder in das auszuschäumende Bauteil gelegt und nach Erhitzen der Schäumform oder des Bauteiles mit dem Schaumstoffmaterial (Al-Schaumkörperelemente) das Bauteil ausgeschäumt. Nach gewünschter Ausbildung des Metallschaumes wird das Bauteil abgekühlt.

CN 102 390 135 B offenbart ein Verfahren zur kontinuierlichen Herstellung von Metallschaumverbundplatten mit Decklagen aus Stahl und einem Metallschaumkörper aus Aluminium zwischen den Decklagen.

US 2013/026155 A1 offenbart eine Fertigungsanordnung umfassend einen Infrarot-Ofen, eine Mehrzahl steuerbarer Temperaturzonen im Infrarot-Ofen, und einen des Infrarot-Ofens nachgeordneten Kühltunnel.

Der Erfindung liegt die Aufgabe zugrunde, ein Verfahren und eine Vorrichtung zur Herstellung von Metallschaumverbundkörpern anzugeben, das sich durch eine hohe Effizienz zur Herstellung formgenauer Metallschaumverbundkörper und die Möglichkeit einer hochproduktiven Fertigung auszeichnet.

Die vorgenannte Aufgabe wird erfindungsgemäß durch ein Verfahren mit den Merkmalen der Ansprüche 1 oder 2 sowie hinsichtlich der Vorrichtung erfindungsgemäß durch Anspruch 8 gelöst.

Vorteilhafte Weiterbildungen des Erfindungsgegenstandes sind Gegenstand der Unteransprüche.

Erfindungsgemäß ist zur kontinuierlichen Herstellung von Metallschaumverbundplatten (als einer Ausführungsform von Metallschaumverbundkörpern) vorgesehen, diese mit Decklagen aus Stahl (SAS-Platten) oder Aluminium (AFS-Platten) herzustellen, wobei eine Vielzahl vorgefertigter, vorzugsweise stranggepresster Metallschaumkörperelemente aus Aluminium, die aus feinen Aluminiumpartikeln in Verbindung mit Treibmittel bestehen, zwischen die Decklagen eingebracht und anschließend kontinuierlich abfolgend in einen Infrarot-Ofen zur Ausschäumung eingesetzt werden. Erfindungsgemäß sind zwischen den Decklagen bzw. Deckplatten eine Vielzahl von Aluminium-Schaumkörperelementen eingelegt und die Sandwichplatten werden in dem Infrarot-Ofen durch eine Mehrzahl steuerbarer Temperierzonen geführt, wobei die Sandwichplatten mit geometrieabhängig gezieltem Wärmeeintrag bis zur Reaktionstemperatur des bzw. der Aluminium-Schaumkörperelemente unter Ausbildung eines Aluminium-Schaumkerns erwärmt werden. Im Falle von Decklagen aus Stahl wird die Temperatur für einen vorgegebenen Zeitraum bei einer Stabilisierungstemperatur nahe bei, aber unterhalb der Solidustemperatur gehalten, zur homogenen, metallurgischen Verbindung zwischen den Stahl-Decklagen und einem aus den Aluminium-Schaumkörperelementen gebildeten, geschlossenporigen Aluminiumschaumkörper zwischen den Stahl-Decklagen. Im Falle von Deckplatten aus Aluminium werden anschließend die Sandwichplatten durch eine Handhabungseinrichtung in eine nachgeordnete Inline-Kalibrierpresse übergeben, anschließend durch einen Kühltunnel geführt und aus einer Fertigungsstraße abgegeben.

Bei Fertigung von SAS-Platten (Stahl-Aluminiumschaum-Stahl-Verbundplatten) entfällt vorzugsweise eine Kalibrierpresse im Anschluss an den Infrarot-Ofen und es schließt sich vorzugsweise eine Kühlstrecke stromab des Infrarotofens an, gefolgt von Abgabe- und ggf. Lagerungsstationen in die die gefertigten Metallschaumverbundplatten von einer Fertigungsstraße aus abgeben werden.

Auf diese Weise wird ein abfolgender (kontinuierlicher) Ofenprozess (mit Haltezeiten in diesem zum Ausschäumen der Verbundplatten) hoher Produktivität eingerichtet, der gestattet, unter reproduzierbaren Bedingungen, vor allem hinsichtlich präzise geregelter Schäumungsbedingungen zur Überwachung und Einstellung des Schäumungsdruckes und der kompletten Ausschäumung des zwischen den Decklagen gebildeten Raumes, maßlich präzise Metallschaumverbundplatten herzustellen, die auf vielen Gebieten der Technik einsetzbar sind.

Die vorgenannte Aufgabe wird ferner durch ein Verfahren zur kontinuierlichen Herstellung von Metallschaumverbundplatten in einer Fertigungsstraße, erfindungsgemäß von Metallschaumverbundplatten aus Sandwichplatten gelöst, mit Decklagen aus Aluminium und einem Metallschaumkörper aus Aluminium zwischen den Decklagen, wobei vorbereitete Sandwichplatten abfolgend in einen Infrarotofen eingeführt werden, zwischen den Deckplatten eine Vielzahl, vorzugsweise stranggepresster Aluminium-Schaumkörperelementen, die aus feinen Aluminiumpartikeln in Verbindung mit Treibmittel bestehen, eingelegt wird und die Sandwichplatten in dem Infrarotofen durch eine Mehrzahl steuerbarer Temperaturzonen geführt werden. Die Sandwichplatten mit geometrieabhängig gezieltem Wärmeeintrag werden auf Reaktionstemperatur der Aluminiumschaumkörperelemente erwärmt und für einen vorgegebenen Zeitraum bei einer Stabilisierungstemperatur nahe aber unterhalb der Solidustemperatur der Decklagen gehalten. Auf diese Weise wird eine homogene metallische bzw. metallurgische Verbindung zwischen den Aluminium-Decklagen und einem aus den Aluminium-Schaumkörperelementen gebildeten, geschlossenporigen Aluminiumschaumkörper zwischen diesen erreicht und es werden die Sandwichplatten durch eine Handhabungseinrichtung in eine nachgeordnete Inline-Kalibrierpresse übergeben, um deren Maß- und Formgenauigkeit zu erhöhen (Verbundplatten werden gerichtet und kalibariert) anschließend durch einen Kühltunnel geführt und schließlich aus der Fertigungsstraße abgegeben.

Bei Verwendung von Aluminiumplatten als Decklagen in Verbindung mit einer Mehrzahl von Decklagen, die zu einem Verbund über Aluminium-Schaumkörper zwischen den Decklagen verbunden sind, ist es nicht erforderlich, die vorbereiteten Halbzeuge zur Bildung der Sandwichplatte im Infrarot-Ofen noch zusätzlich in Formen, d. h. zwischen einem Oberrost und einem Unterrost, aufzunehmen. Vielmehr ist eine punkt- oder linienförmige, möglichst gleichmäßige Abstützung der vorbereiteten Sandwichplatten von unten ausreichend, auch im Hinblick auf eine möglichst gleichmäßige Wärmeverteilung innerhalb der Sandwichplatte während des Schäumprozesses, in dem die insbesondere obere Decklage für die Infrarotstrahler des Infrarotofens frei zugänglich ist. Hingegen werden SAS-Metallschaumverbundplatten vorzugsweise kraftschlüssig zwischen einem Ober- und Unterrost zur Ausschäumung aufgenommen.

Die obige Aufgabe wird ferner durch eine Fertigungsanordnung zur kontinuierlichen Herstellung von Metallschaumverbundplatten als Sandwichplatten gelöst, mit Decklagen aus Stahl oder Aluminium und eine Mehrzahl von Aluminium-Schaumkörpern zwischen den Decklagen in einer Fertigungsstraße, wobei die Metallschaumverbundplatten abfolgend in einen Infrarot-Ofen und ggf. (bei leicht im Ofenprozess sich lage- bzw. formverändernden Decklagen, insbesondere Al-Decklagen) in eine nachgeordnete Kalibrierpresse sowie einen sich stromab derselben befindenden Kühltunnel geführt werden. Der Infrarotofen weist eine flächendeckende Infrarotstrahleranordnung mit reaktionsschneller, präziser Temperatursteuerung im Bereich von +/- 5 Grad Kelvin mit einer Ansprechzeit von wenigen Sekunden und lokal steuerbarer Leistungssteuerung der Infrarotstrahler, die in Strahlerfeldern mit verschiedenen Heizzonen angeordnet sind, auf. Am Ende der Fertigungsstraße werden die geschäumten Metallschaumverbundplatten in eine Entnahmestation geführt.

Vorzugsweise wird in der Fertigungsstraße für SAS-Metallschaumverbundplatten (Decklagen aus Stahl) schäumbares Aluminium in eine Stahlform in zuvor berechneter Menge eingelegt und anschließend mit einem Deckblech verschlossen. Die Stahlform bildet einen Teil der späteren Metallschaum-Verbundplatte von im Querschnitt U-förmiger oder schalenförmiger Konfiguration, die nach Einlegen der Metallschaumköperelemente aus vorzugsweise stranggepresstem Aluminium mit einem Stahlblech (obere Decklage) verschlossen wird, z. B. durch Heftschweißen. Das so vorbereitete Sandwich wird in einem neu konstruierten Rahmen eingespannt und auf dem Aufgaberollgang platziert. Über einen thermischen Prozess erfolgt die Schäumung des Füllmaterials (Al-Metallschaumkörperelemente). Ein quasikontinuierlicher Infrarot-Ofen mit integrierter Temperaturzonensteuerung dient zur Einstellung optimaler Schäumbedingungen. Die Sandwichplatten werden in dem quasikontinuierlichen Infrarot-Ofen durch eine Mehrzahl steuerbarer Temperaturzonen geführt. Die Sandwichplatten werden mit geometrieabhängig gezieltem Wärmeeintrag bis zur Reaktionstemperatur der Aluminiumschaumkörperelemente erwärmt und für einen vorgegebenen Zeitraum bei einer Stabilisierungstemperatur nahe bei, aber unterhalb der Solidustemperatur gehalten. Dies dient der Herstellung einer homogenen, metallischen Verbindung zwischen den Stahl-Decklagen und dem geschlossenporigen Aluminiumschaumkörper.

Auf diese Weise wird ein kontinuierlicher Durchlaufprozess hoher Produktivität eingerichtet.

Bei Decklagen aus Aluminium werden die Sandwichplatten durch eine Handhabungseinrichtung aus dem Infrarotofen in eine nachgeordnete Inline-Kalibrierpresse übergeben und hier sowohl gerichtet als auch kalibriert, anschließend ggf. durch einen Kühltunnel geführt und aus einer Fertigungsstraße (Rollengang) abgegeben.

Durch die Erfindung wird ein Verfahren zur kontinuierlichen Herstellung von Metallschaumverbundplatten in einer Fertigungsstraße geschaffen. Hierbei werden vorbereitete Sandwichplatten kontinuierlich durch einen quasikontinuierlichen Infrarot-Ofen hindurchgeführt.

Bei Verwendung von Aluminiumplatten als Decklagen in Verbindung mit einer Mehrzahl derselben ist das Einspannen in eine Form nicht erforderlich. Vielmehr ist eine punkt- oder linienförmige möglichst gleichmäßige Abstützung der vorbereiteten Sandwichplatten vorteilhaft. Dies gilt besonders im Hinblick auf eine möglichst gleichmäßige Wärmeverteilung innerhalb der Sandwichplatte während des Schäumprozesses.

Erfindungsgemäß ist eine neue Fertigungsanordnung zur kontinuierlichen Herstellung von Metallschaumverbundplatten als Sandwichplatten vorgesehen. Vorzugsweise dient hierzu eine kontinuierliche Fertigungsstraße beginnend mit einer Aufgabestation, einem quasikontinuierlichen Infrarotofen, einem Ausfahrrollgang, einer Kalibrierpresse und einem anschließenden Kühltunnel. Wesentlich ist eine flächendeckende Infrarot-Strahler-Verteilung mit reaktionsschneller Ansteuerung und mehrfacher Temperaturzonen-Unterteilung.

Diese Fertigungsanordnung dient der Herstellung von AFS-Verbundplatten (aluminium-foam-sandwich). Bei SAS-Verbundplatten (steel-aluminium-steel) entfällt im allg. die In-Line-Kalibrierpresse aufgrund der hohen Formstabilität der Deckplatten.

Die Erfindung wird nachstehend anhand eines Ausführungsbeispiels und zugehöriger Zeichnungen näher erläutert. In diesen zeigen:
- Fig.: 1 eine Fertigungsanordnung zur kontinuierlichen Herstellung von Aluminiumschaum-Verbundplatten (AFS-Platten) in perspektivischer Darstellung nach einem ersten Ausführungsbeispiel,
- Fig. 2: eine Zusammenordnung von Infrarot-Ofen und Kalibrierpresse mit Übergabestation zwischen diesen in perspektivischer Darstellung (AFS-Fertigung), nach Fig. 1
- Fig.: 3 eine schematische Querschnittdarstellung der Zusammenordnung nach Fig. 2,
- Fig. 4: eine schematische Darstellung des oberen und unteren Strahlerfeldes der Infrarotstrahler des Infrarot-Ofens mit schematischer Darstellung einer Heizzonenzuordnung,
- Fig. 5: eine nicht-erfindungsmäßige Fertigungsanordnung zur kontinuierlichen Herstellung von Aluminiumschaum-Verbundplatten (SAS-Platten) mit Decklagen aus Stahl nach einem zweiten Ausführungsbeispiel der Erfindung,
- Fig. 6: eine schematische perspektivische Darstellung des Infrarot-Ofens mit zugeordneter Bereitstellungsposition und Verbundplatten-Abnahmebereich nach Fig. 5 (SAS-Fertigung)
- Fig. 7: einen Kühltunnel zur Bildung eines Kühlkanales für Fertigungsanordnungen nach den Ausführungsbeispielen gemäß Fig. 1 oder 5,
- Fig. 8a: einen Auflagerost zur Auflage von Aluminiumschaum-Verbundplatten mit Decklage aus Aluminium für eine Fertigungsanordnung nach Fig. 1,
- Fig. 8b: einen Auflage- und Einspannrost zur Auflage von Aluminiumschaum-Verbundplatten mit Decklagen aus Stahl für eine Fertigungsanordnung nach Fig. 5,
- Fig. 9: Querschnitt einer nicht-erfindungsmäßigen Sandwichplatte (AFS) mit Decklagen aus Aluminium und
- Fig. 10: Querschnitt einer nicht-erfindungsmäßigen Sandwichplatte (SAS) mit Decklagen aus Stahl.

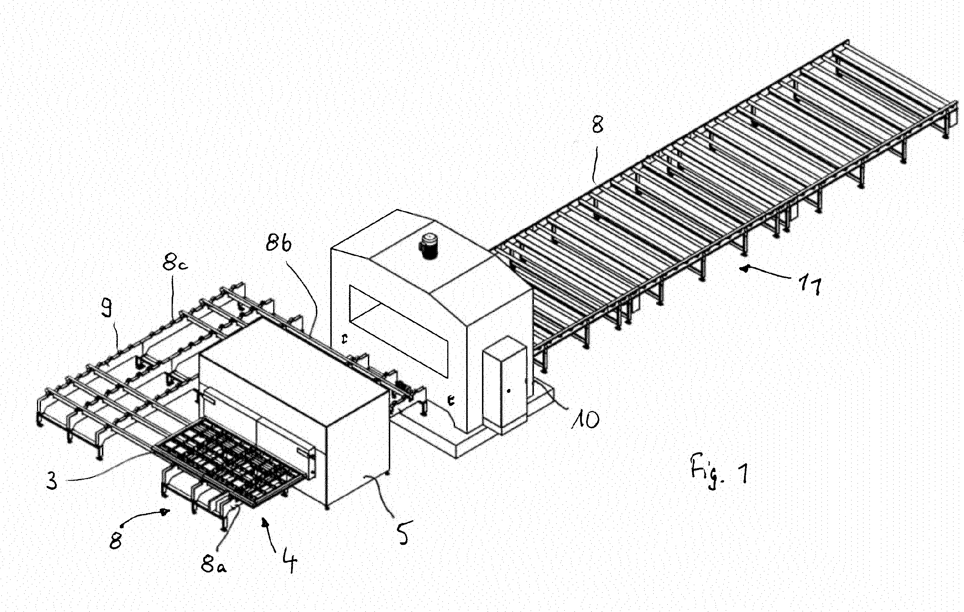

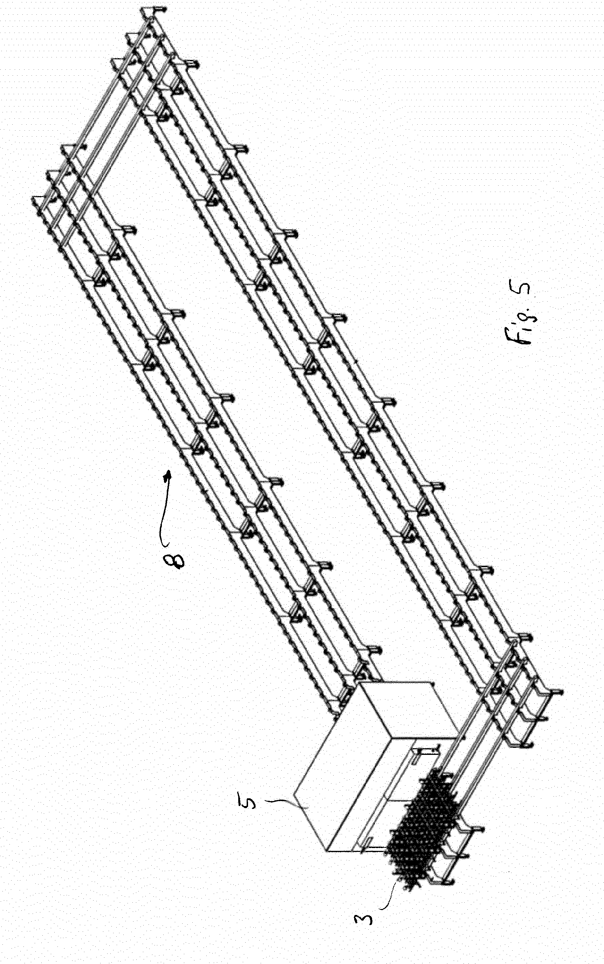

Nachfolgend werden Ausführungsbeispiele für vollautomatische Fertigungsanordnungen zur kontinuierlichen Herstellung von Aluminiumschaum-Verbundplatten mit Decklagen 1 aus Aluminium (sogenannte AFS-Platten, Aluminium-Foam-Sandwich) anhand von Fig. 1 sowie eine Fertigungsanordnung zur kontinuierlichen Herstellung von Aluminiumschaum-Verbundplatten mit Decklagen aus Stahl (sogenannte SAS-Platten, Stahl-Aluminiumfoam-Sandwich) anhand von Figur 5 erläutert.

Hierbei werden vorbereitete Sandwichplatten in einem Schäumrahmen im Bereich der Materialbereitstellung aufgelegt. Ein solcher Auflagerost (Rahmen) befindet sich auf einem durch den Infrarotofen hindurchführenden Ketten- oder anderweitigen Längsfördersystem. Damit wird der Auflagerost präzise in den Ofenraum eingefahren und dieser automatisch verschlossen.

Im Infrarotofen führt eine gleichmäßige Erwärmung unter Ausnutzung der mehrfachen Zonensteuerung zur Schaumbildung der Aluminium-Schaumkörperelemente aus Aluminium. Die Infrarotstrahler sind dabei gegen austretende Schmelze geschützt und werden in dem Anschlussbereichen entsprechend gekühlt.

Die Gitterstruktur des Schäum-Rahmens ist so konstruiert, dass eine Durchbiegung der Decklagen (Kissenbildung) vermieden wird und gleichzeitig eine homogene Abstützung der Decklagen erzielt werden kann. Die Nutzung von kombinierten Infrarotstrahlern im Infrarot-Ofen gestattet eine präzise Temperatursteuerung im Bereich von +/- 5 Grad Kelvin mit einer Ansprechzeit von wenigen Sekunden und damit ein hohes Maß an produkt- und prozessbedingter Individualsteuerbarkeit zur insbesondere lokal gezielten Beeinflussung der Al-Schaumbildung.

Bei der Herstellung von SAS-Verbundplatten (Decklagen aus Stahl) wird die vorbereitete Sandwichplatte nach Einführen in dem Infrarot-Ofen bis zur Reaktionstemperatur des Treibmittels erwärmt und dann bei einer Temperatur kurz unterhalb der Solidustemperatur der Decklagen bzw. Deckplatten für einen definierten Zeitraum bei dieser Temperatur gehalten, damit der Metallschaum aus den Aluminium-Metallschaumkörpern sich vollständig ausbilden und eine homogene metallische Verbindung mit den Deckplatten bilden kann.

Hierbei ist auf Temperaturunterschiede über den Querschnitt bzw. über die Oberfläche der Sandwichplatte zu achten, wobei dies (z. B. Temperaturabfall an den Rändern) durch individuelle Ansteuerung von Infrarotelementen (Zonen) des Infrarot-Ofens ausgeglichen werden kann.

Durch den Einsatz großflächiger Strahlfelder wird das Auftreten von Kaltstellen minimiert. Vorzugsweise weist der Infrarotofen schnelle Öffnungsmechanismen für hier nicht näher dargestellte Ofenschotts (Türen) auf.

Die Infrarotstrahler des Infrarot-Ofens sind gegen austretende Schmelze durch konstruktive Maßnahmen und Sicherheitseinrichtungen geschützt. Hierzu gehören auch umlaufende Schmelzrinnen 7 bei den Auflagerosten.

In die Fertigungsanordnung für die Festlegung von AFS-Verbundplatten (Decklagen aus Aluminium) ist ein Rückführtransportrollgang integriert, der die leeren Formen zurück zum Aufgabetisch führt, nachdem das Sandwich mit Hilfe einer Übergabeeinrichtung in eine nachgeordnete Kalibrierpresse übergeben wurde. Unter Ausnutzung der vorhandenen Wärme wird hier im Anschluss das Sandwich auf seine endgültige Höhe kalibriert und eventuelle Höhenunterschiede ausgeglichen.

Der sich anschließende Kühlkanal dient sowohl der gleichmäßigen und steuerbaren Abkühlung der Sandwiches als auch der integrierten Energierückgewinnung. Eine Schottung des Tunnelbereiches kann in verschiedenen Bauausführungen erfolgen und ist hier nicht näher beschrieben und dargestellt.

Eine Mehrzahl von Segmenten des Kühltunnels sollte mit Zuluft- und Abluftöffnungen versehen werden. Die Innenwände des Kühltunnels sind isoliert. Durch den Kühltunnel wird eine übermäßige Aufheizung der Umgebungsatmosphäre der Fertigungsanordnung vermieden und zugleich für eine gesteuerte und gezielte Temperierung und Abkühlung der kalibrierten geschäumten Verbundplatten gesorgt.

Gegebenenfalls können auch weitere Schotttüren zwischen und innerhalb von Segmenten des Kühltunnels vorgesehen sein, um definierte Temperaturführungen und Abkühlzonen einzurichten.

Am Ende der Verbundplatten-Transporteinrichtung und stromab des Kühltunnels befindet sich eine Materialabnahmestation, an der die geschäumten und abgekühlten Verbundplatten gestapelt, z.B. auf Paletten abgelegt bzw. durch Abnahmesysteme in benachbarte Lagereinrichtungen überführt werden können, ohne dass dieses im Einzelnen dargestellt wären.

Ein Verfahrensablauf zur Herstellung einer AFS-Sandwichplatte weist insbesondere einen der nachfolgenden Verfahrensschritte auf:
1. Manuelles Auflegen eines Rohlings (Decklagen mit zwischenliegenden Aluminiumschaumkörperelementen)
2. Prozessstart durch Betätigung eines entsprechenden Schalters
3. Öffnen des Einfahrschotts
4. Einfahren des Rahmens inklusive Rohlings
5. Schließen des Einfahrschotts
6. Start des Schäumprozesses
7. Öffnen des Ausfahrschotts
8. Ausfahren des Rahmens inklusive des Sandwiches
9. Übergabe des Sandwiches in die Kalibrierpresse
10. Rückführung des leeren Rahmens
11. Kalibrierung des Sandwichs
12. Übergabe in den Kühltunnel
13. Abnahme des Sandwichs und Einlagerung im Kühlregal

Dieser Gesamtprozess wird über eine Bedienungssoftware automatisch gesteuert und über verschiedenste Sensoren geregelt und überwacht. Eine entsprechende logische Steuerung ist im System gespeichert und hinterlegt.

Für die SAS-Fertigungsstraße (Rohling mit Deckplatten aus Stahl) entfällt die Kalibrierpresse, so dass Rahmen inklusive Sandwich den gesamten Kühltunnel passieren und erst an der Materialentnahme getrennt werden. Von hier aus erfolgt der Rücklauf des Rahmens über einen entsprechend verlängerten Rückführrollgang.

Es ist vorgesehen, AFS-Verbundplatten (Aluminiumdecklage/ Aluminiumschaumkörper/ Aluminium-Decklage) in Größen von z. B. 2500 x 1250 mm herzustellen, wobei deren Gesamtdicke vorzugsweise im Bereich von 10 bis 50 mm liegt, bei einer AL-Deckblechdicke zwischen etwa 0,8 und ca. 8,0 mm. Eine Schaumdichte des Aluminiumschaumes in der Verbundplatte liegt vorzugsweise im Bereich von ca. 0,4 g/cm³ bis 0,9 g/cm³.

Eine derartige, typische und hier industrielle in einem automatischen Durchlaufverfahren kontinuierlich hergestellte Aluminiumschaum-Verbundplatte (ASF-Platte) hat vorzugsweise folgende physikalische Eigenschaften:

| | |
|---|---|
| Dichte Decklagen: | 2,7 g/cm³ |
| Dichte Schaum | 0,7 g/cm³ |
| Gesamtdicke: | 10 mm bis 50 mm |
| Dicke Decklagen | 1 mm bis 8 mm |

Bei der Herstellung von AFS- oder SAS-Verbundplatten können auch mehrere Deckplatten miteinander verbunden werden, wobei eine Verbindung (metallische Bindung) einzelner Schichten miteinander durch einen Diffusions-Schweiß-Prozess (Verbindung während des Schäumprozesses) erzeugt werden kann. Es können auch Sandwiches mit einer Mehrzahl von Decklagen, die jeweils durch einen Aluminiumschaumkörper verbunden sind, gefertigt werden.

Vorzugsweise sind für derartige SAS-Sandwiche Größen von ca. 3000 mm x 1500 mm vorgesehen. Die Dicke einer Sandwichplatte liegt vorzugsweise im Bereich von 10 bis 50 mm. Eine Dicke der Decklagen (Stahl) beträgt vorzugsweise zwischen 0,8 bis 10,0 mm und eine Dichte des Aluminiumschaumkörpers liegt vorzugsweise im Bereich von ca. 0,4 g/cm³ bis 0,9 g/cm³.

Eine typische derartige Sandwichplatte (Stahl-AI-Schaumkern-Stahl) kann folgende physikalische Eigenschaften aufweisen:

| | |
|---|---|
| Dichte Decklagen: | 7,85 g/cm³ |
| Dichte Schaum | 0,7 g/cm³ |
| Gesamtdicke: | 10 mm bis 50 mm |
| Dicke Decklagen | 1 mm bis 8 mm |

Durch die Erfindung wird erstmals ein automatisiertes Verfahren zur Herstellung von großflächigen Metallschaum-Verbundplatten in einer Fertigungsstraße angegeben und somit eine industrielle Herstellung derartiger Verbundplatten mit Aluminium-Schaumkörpern möglich, sei es mit Aluminium-Decklagen oder mit Stahl-Decklagen.

Derartige Sandwichplatten zeichnen sich durch ein verhältnismäßig geringes Gewicht bei hoher Steifigkeit und exzellenten Festigkeitswerten bei großer Ebenheit und hoher Gleichmäßigkeit der Schaumkörperstruktur aus.

Die vorerläuterten Ausführungsbeispiele werden unter engerer Bezugnahme auf die beigefügten Figuren nachfolgend noch weiter erläutert.

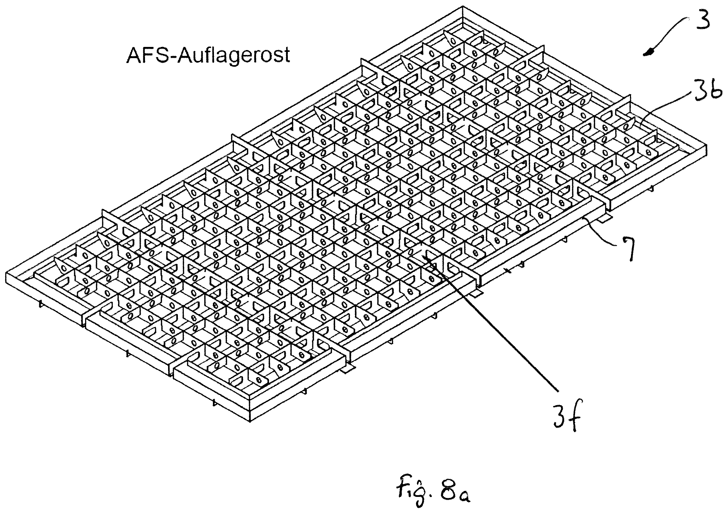

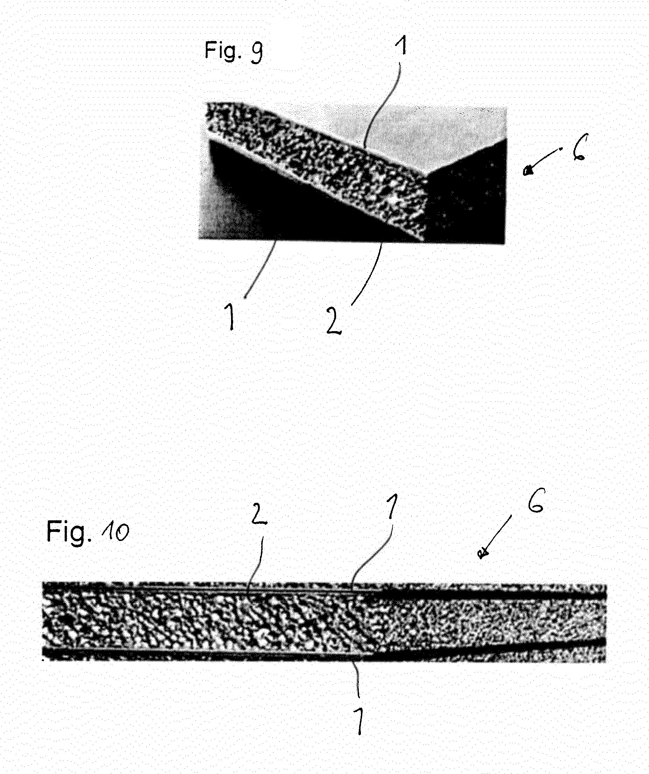

Für das Ausführungsbeispiel nach Fig. 1 werden zwei Deckplatten 1 aus Aluminium (siehe Fig. 9) mit zwischen diesen eingesetzten Aluminium-Schaumkörperelementen, vorzugsweise stranggepresste Aluminium-Schaumkörperelementen, vorbereitet und unter einzelner oder in Abhängigkeit von der Größe nebeneinanderliegender Anordnung auf ein Auflagerost 3 aufgelegt, wobei ein solcher Auflagerost 3 im Bereich einer Materialbereitstellung 4 der in Fig. 1 dargestellten Fertigungsanordnung aufgelegt und vorbereitet wird. Ein solcher Auflagerost 3 (vgl. Fig. 8a) befindet sich auf einem durch einen Infrarot-Ofen 5 hindurchführenden Ketten- oder anderweitigen Längsfördersystem 8, mit dem der Auflagerost 3 mit der oder den auf diesem aufliegenden, vorbereiteten Sandwichplatten in den Infrarot-Ofen 5 gefördert werden. Der Auflagerost 3 weist umlaufende Tropfrinnen 7 für überschüssigen Aluminiumschaum auf und ist als Unterrost 3b mit Auflage- und Führungsschienen 3f in einem engmaschigen Gitterabstand versehen.

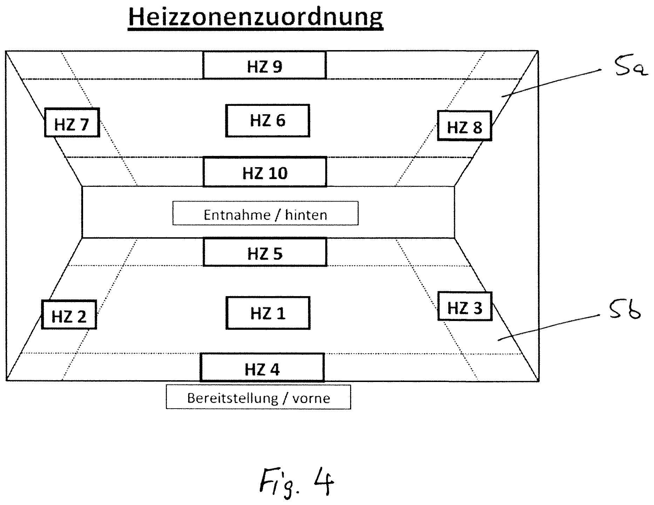

Im Infrarot-Ofen 5, wird für eine gleichmäßige Erwärmung zur Schaumbildung der Aluminium-Schaumkörperelemente und Ausschäumen des Zwischenbereiches zwischen den Decklagen 2 der vorbereiteten Sandwichplatte unter Dickenzunahme und "Anheben" der oberen Aluminium-Decklage und unter Herstellung einer metallurgischen Verbindung zwischen dem Aluminiumschaum und den Decklagen 1 gesorgt. Eine gleichmäßige Erwärmung auf die Schäumtemperatur erfolgt unter Einsatz entsprechender Infrarot-Strahler in dem Infrarot-Ofen 5, die in einem oberen Strahlerfeld 5a und einem unteren Strahlerfeld 5b in mehreren, vorzugsweise je fünf separat leistungsregelbaren Heizzonen angeordnet sind (vgl. Fig. 4), statt. Die Infrarotstrahler sind dabei gegen austretende Schmelze geschützt und eine Steuerung von Temperaturzonen innerhalb des Infrarot-Ofens im mittleren Kern- ebenso wie im Randbereich der Aluminiumschaum-Verbundplatte oder -platten unter flächendeckender Strahlanordnung und Vermeidung von Kaltstellen im Material, führt zu einer gleichmäßigen Ausschäumung des Zwischenraumes zwischen den Decklagen 1 der Sandwichplatte und zur Herstellung der Aluminiumschaum-Verbundplatten 6.

In Figur 4 ist schematisch die Anordnung und Lokalisation von jeweils fünf Heizzonen im oberen Strahlerfeld 5a und im unteren Strahlerfeld 5b schematisch dargestellt. Diese führt einen sehr homogenen Energieeintrag in die auszuschäumende Plattenanordnung, wobei diese sich in dem Bereich zwischen Entnahme/hinten und Bereitstellung/vorne befindet.

Mit HZ und entsprechenden Nummern sind jeweils die zugehörigen Heizzonen bezeichnet, die hier durch punktierte Linien voneinander abgegrenzt sind.

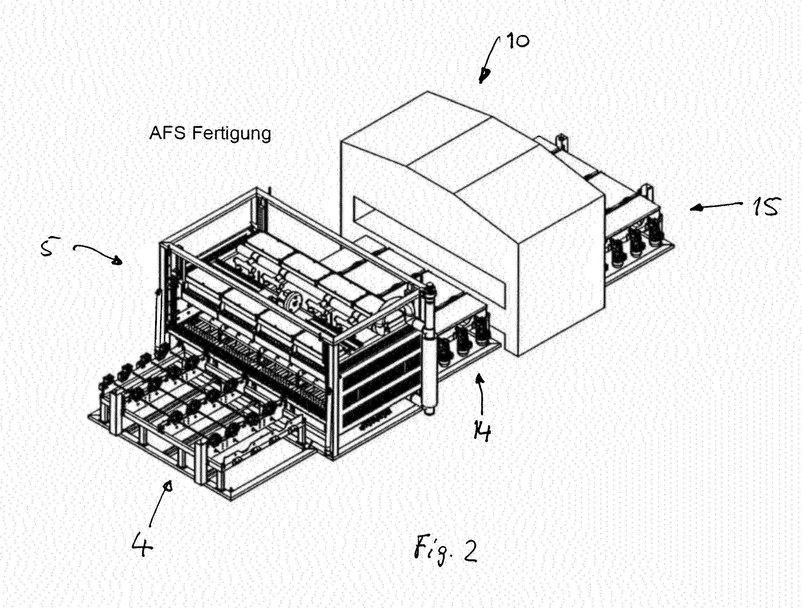

Figur 2 ist die Zusammenordnung von Infrarot-Ofen 5 und Kalibrierpresse 10 mit zwischen diesen angeordneter Übergabestation 14 sowie zum Infrarotofen zugeordneter Bereitstellungsposition 4 und Verbundplatten-Abnahmebereich 15 noch einmal schematisch dargestellt, wobei die Rückführung der Auflageroste 3 durch ein Rückführsystem 8a bis 8c (vgl. Fig. 1) hier nicht dargestellt ist.

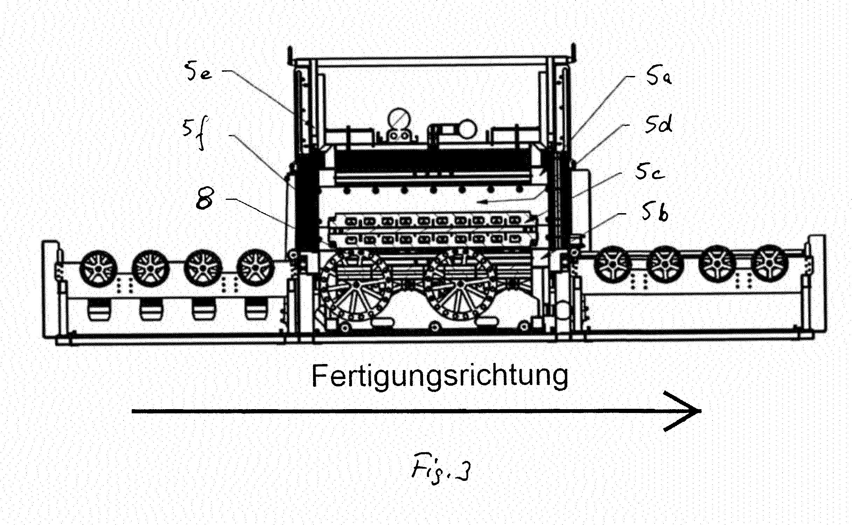

Eine schematische Schnittdarstellung der Ausführung des Infrarot-Ofens 5 mit zugeordneter Materialbereitstellungsposition 4 und Verbundplatten-Abnahmestation 15 zeigt Figur 3.

Für den entsprechenden Wärmeeintrag in das vorbereitete Plattensystem bestehend aus einer unteren Aluminium-Deckplatte, einer Vielzahl von Aluminium-Schaumkörperelementen auf dieser und einer oberen Aluminium-Deckplatte aufgelegt auf einen (unteren) Auflagerost 3, weist der Infrarot-Ofen 5 ein oberes Strahlerfeld 5a und ein unteres Strahlerfeld 5b auf, jeweils bestehend aus einer Vielzahl, vorzugsweise horizontal angeordneter Infrarot-Strahler 5c (Infrarot-Lampen mit hoher Temperatur- und Standzeit) zwischen denen das vorbereitete Plattensystem eingesetzt wird. Vorzugsweise weist der Infrarot-Ofen eine maximale Leistung von mehr als einem Megawatt auf.

Die Kühlung des Infrarot-Ofens, insbesondere der Infrarot-Strahler erfolgt einerseits mittels einer Wasserkühlung der elektrischen Anschlüsse der Infrarot-Strahler, wie auch einer zusätzlichen Luftkühlung der Infrarot-Strahler selbst, die in im Wesentlichen horizontalen Glasrohren angeordnet, durch einen umspülenden Luftstrom innerhalb der hier nicht im Einzelnen gezeigten Glasrohre nochmals gekühlt werden. Selbstverständlich sind entsprechende Einrichtungen zur Zu- und Abführung der Luft in die Glas-Schutzrohre der Infrarot-Lampen vorgesehen.

Der Infrarot-Ofen 5 weist Ofentüren 5f an seiner Vorderseite und seiner Rückseite auf, die nach Einsetzen des Plattensystems zur Bildung einer AFS-Schaumplatte (Sandwichplatte) und während des Schäumprozesses geschlossen werden, wobei vorzugsweise eine hohe Dichtigkeit und Temperaturabschirmung durch eine mehrachsige Bewegung der Ofentüren 5c Sorgegetragen ist.

Eine Ofenkammer ist in Figur 3 mit 5d bezeichnet und das Ofengestell mit 5e.

Stromauf und stromab des Infrarot-Ofens 5 befinden sich ferner Abstandsmess- und Überwachungseinrichtungen z. B. um den Schließzustand der Ofentüren zu signalisieren. Vorzugsweise sind lasergestützte Sensorsysteme (hier nicht gezeigt) vorgesehen.

Ein Verbundplatten-Transportsystem ist in Fig. 3 mit 8 bezeichnet. Der Fertigungsablauf erfolgt in Pfeilrichtung.

Die Übergabestation 14 bildet ein Handlingssystem, um die noch ofenwarme, geschäumte Sandwichplatte (AFS-Platte) zur Verbesserung deren Maßhaltigkeit sowie auch zur Vergütung der Oberfläche, insbesondere für eine Höhenkalibrierung, in eine anschließende Kalibrierpresse 10 einzulegen. Hierbei hat die ausgeschäumte Sandwichplatte eine erhöhte Temperatur von z. B. ca. 550°C um ohne Zusatzheizungen in der Kalibrierpresse eine Höhenkalibrierung wie auch eine Vergütung der Oberflächen der Decklagen der Aluminium-Sandwichplatte zu bewirken.

Anschließend, stromab der Kalibrierpresse 10, kann in der Abnahmestation 15 die fertige AFS-Verbundplatte abgenommen oder aber, wie in Figur 1 gezeigt, auf eine anschließende Kühlstrecke mit einem Kühltunnel 11 überführt werden.

Auch der Kalibriervorgang und der großflächige Angriff der Kalibrierwerkzeuge an den Decklagen der Verbundplatte dienen zugleich zur Abkühlung der geschäumten Sandwichplatte.

Es wird im Gesamtprozess dafür Sorge getragen, dass sowohl die Restwärme des Schäumprozesses als auch die übrige Prozesswärme z. B. aus der Kühlstrecke über Wärmetauscher rückgewonnen wird und für weitere Nutzungen zur Verfügung steht.

Die wesentliche Kühlung des Infrarot-Ofens sowohl mit Wasserkühlung der elektrischen Anschlüsse der Infrarot-Strahler als auch mit zusätzlicher Luftkühlung der Infrarot-Lampen selbst, führt ebenfalls zu einem wesentlichen Energierückgewinnungspotential über entsprechende, hier nicht dargestellte Wärmetauschereinrichtungen.

Die Integration der Kalibrierpresse 10 in den Fertigungsablauf zur Fertigung von AFS-Verbundplatten (Aluminiumfoamsandwich) ermöglicht zugleich die Nutzung der Restwärme des Schäumprozesses (Wärme der Verbundplatte) für den qualitätssichernden Kalibriervorgang.

Die Verwendung zonengesteuerter Infrarotlampen in je einem oberen und unteren Strahlerfeld 5a, 5b führt zur Vergleichmäßigung eines gezielten Energieeintrages und zum Ausgleich von Temperaturunterschieden innerhalb der Platten bei gleichzeitiger Einstellung eines permanenten Temperaturniveaus während des gesamten Schäumprozesses.

Zur Steuerung des Gesamtprozesses wird Automatisierungssoftware und eine industrielle Prozessführung unter Einbeziehung aller erforderlichen Prozessschritt einschließlich der Kühltechnologie für die Kühlung des Infrarot-Ofens 5 und einschließlich der Energierückgewinnung für eine hohe Energieeffizienz des Prozesses verwendet.

Eine Gitterstruktur des Auflagerostes 3 weist definierte punkt- oder linienförmige Auflagebereiche für die jeweilige untere Deckplatte 1 der Sandwichplatte auf, so dass Durchbiegungen der Sandwichplatte im Schäumprozess vermieden werden. Eine vorbestimmte und reaktionsschnelle Ansteuerung der Infrarotstrahler im Infrarot-Ofen gestattet eine präzise Temperatursteuerung im Bereich von +/- 5 Grad Kelvin mit einer Ansprechzeit von wenigen Sekunden und damit ein hohes Maß an produkt- und prozessbedingter Individualsteuerbarkeit der Schaumbildung und Eigenschaften der fertigen Aluminiumschaum-Verbundplatte.

Die vorbereitete Sandwichplatte aus Aluminium-Decklagen und Aluminium-Schaumkörperelementen (die ihrerseits aus feinen Aluminiumpartikeln in Verbindung mit einem Treibmittel bestehen und vorzugsweise stranggepresste Elemente bilden) werden nach Einführen in dem Infrarot-Ofen bis zur Reaktionstemperatur der Aluminiumschaumkörperelemente erwärmt und dann bei einer Temperatur kurz unterhalb der Solidustemperatur der Decklagen bzw. Deckplatten für einen definierten Zeitraum bei dieser Temperatur gehalten, damit der Metallschaum 2 aus den Aluminium-Metallschaumkörpern sich vollständig ausbilden und eine homogene metallurgische Verbindung mit den Deckplatten bzw. Decklagen aus Aluminiummaterial eingehen kann.

Hierbei ist auf Abkühlungsunterschiede über den Querschnitt bzw. über die Oberfläche der Sandwichplatte zu achten, wobei dies (z. B. Temperaturabfall an den Rändern) durch individuelle Ansteuerung von Infrarotelementen des Infrarot-Ofens 5 ausgeglichen werden kann.

Es muss also auf eine gezielte und über den Querschnitt und/oder die Oberfläche der Verbundplatte individuelle Temperaturführung im Inneren des Infrarot-Ofens 5 geachtet werden, da es im Randbereich der Sandwichplatte zu einer schnelleren Abkühlung als im Inneren derselben kommt.

Daher weist der Infrarot-Ofen 5 eine Mehrzahl individuell ansteuerbarer Temperaturzonen und Infrarotelemente in diesen auf (siehe Fig. 4).

Insbesondere weist der Infrarot-Ofen 5 großflächige obere und untere Strahlerfelder 5a, 5b (siehe Fig. 3) auf, so dass Kaltstellen bei der Ausbildung des Schäumprozesses vermieden wird.

Vorzugsweise weist der Infrarotofen schnelle Öffnungsmechanismen für Ofenschotts (Ofentore) 5f auf und sind die Infrarotstrahler des Infrarot-Ofens 5 gegen austretende Schmelze durch konstruktive Maßnahmen und Sicherheitseinrichtungen geschützt. Zu gleichem Zweck weisen die Auflageroste 3 umlaufende Schmelzrinnen 7 auf.

Innerhalb der Fertigungsanordnung ist sowohl stromab des Infrarot-Ofens 5 als auch seitlich desselben unter Rückführung auf die Seite der Materialaufgabe ein Transportsystem 8 bestehend aus Längs- und/oder Quer- und /oder Rücktransport 8a bis 8c, vorzugsweise gebildet aus Transportketten 9 vorgesehen, um im Anschluss an den Schäumprozess, z. B. fehlerhafte Produkte aus dem Fertigungsablauf ausschleusen, vor allem aber um die Auflageroste 3 in den Eingangsbereich des Infrarot-Ofens 5 zurückzuführen zu können.

Dieser findet seine Fortsetzung in einer im Anschluss an den Infrarot-Ofen 5 unter Vermittlung eines Übergabe-Transportsystems 8 vorgesehene Kalibrierpresse 10 zum Kalibrieren der geschäumten Aluminiumverbundplatten 6, um hohe Qualitätsstandards zu erfüllen und ggf. auftretende Ungleichmäßigkeiten aus dem Schäumprozess im Infrarot-Ofen 5 auszugleichen.

Im Anschluss an die Inline-Kalibrierpresse 10, die also in den Transportdurchlauf der Aluminiumschaum-Verbundplatten 6 integriert ist, befindet sich ein Kühlkanal 11, d. h. eine Auslaufund Abkühlstrecke mit einem in Figur 3 gezeigten, separaten Kühltunnel 12, der auf das in Fig. 1 dargestellte Auslauf- und Transportsystem für die geschäumten Verbundplatten aufgesetzt wird und sich stromab der Kalibrierpresse 10 befindet. Vorzugsweise weist der Kühltunnel 12 am Anfang und an seinem Ende eine Schotttür auf, die hier in der schematischen Darstellung in Fig. 3 nicht dargestellt ist.

Vorzugsweise ist jedes oder jedes zweite bzw. eine Mehrzahl von Segmenten 12a des Kühltunnels 12 mit Zuluft- und Abluftöffnungen 13 versehen und sind die Innenwände des Kühltunnels isoliert. Durch den Kühltunnel 12 wird eine übermäßige Aufheizung der Umgebungsatmosphäre der Fertigungsanordnung vermieden und zugleich für eine gesteuerte und gezielte Temperierung und Abkühlung der kalibrierten geschäumten Verbundplatten Sorge tragen. Gegebenenfalls können auch weitere Schotttüren zwischen und innerhalb von Segmenten 12a des Kühltunnels 12 vorgesehen sein, um definierte Temperaturführungen und Abkühlzonen einzurichten.

Am Ende der Verbundplattenplatten-Transporteinrichtung 6 und stromab des Kühltunnels 12 befindet sich eine Materialabnahmestation 14, in der die geschäumten und abgekühlten Verbundplatten 6 gestapelt, z. B. auf Paletten abgelegt bzw. durch Abnahmesysteme in benachbarte Lagereinrichtungen überführt werden können, ohne dass dieses im Einzelnen dargestellt wäre.

Ggf. können auch Systeme zur Energierückgewinnung aus der Prozessabwärme des Infrarot-Ofens/Kühltunnel-Systems vorgesehen sein.

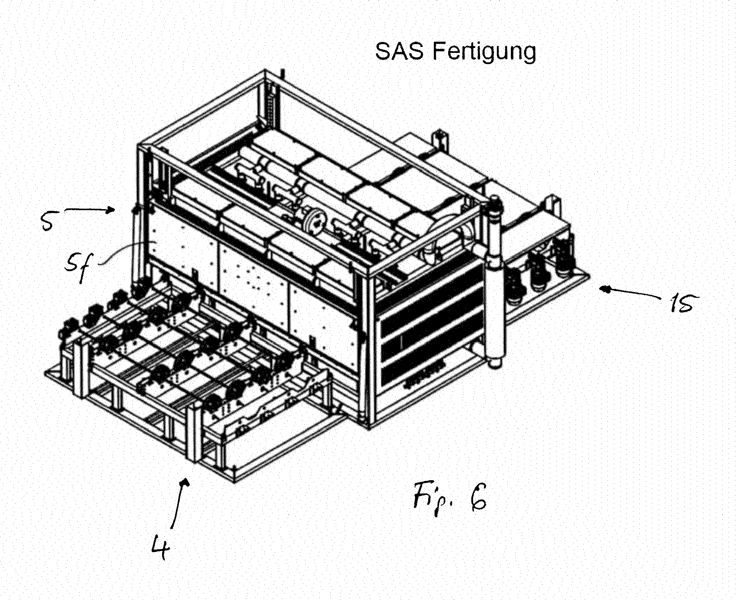

Fig. 5 zeigt eine nicht-erfindungsmäßige Fertigungsanordnung zur kontinuierlichen Anordnung von Metallschaum-Verbundplatten (Aluminiumschaum-Verbundplatten) mit Decklagen 1 aus Stahl, wobei ein Querschnitt eines fertigen Produktes mit einem Aluminiumschaumkörper zwischen diesen in Fig. 6 dargestellt ist.

Fig. 6 zeigt nur den Infrarot-Ofen 5 mit zugehöriger Materialbereitstellungsposition 4 und Plattenabgabestation 15 ohne ggf. vorgesehene Kühlstrecken, wie sie in Fig. 5 gezeigt sind.

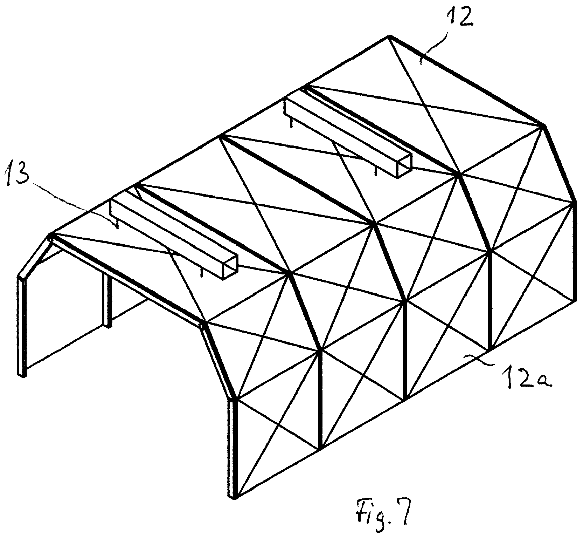

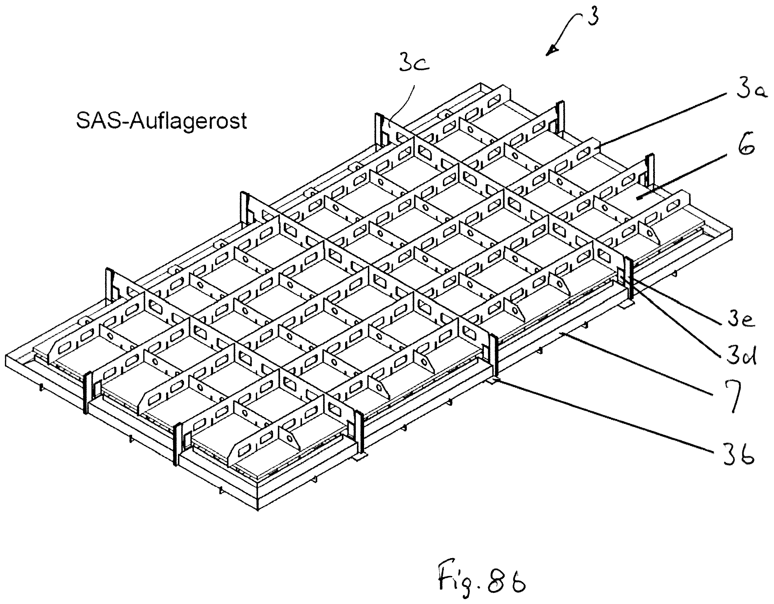

Die weitere Fertigungsanordnung zur kontinuierlichen Herstellung von Teilschaumverbundplatten mit Drecklagen aus Stahl (SAS-Platten) zwischen denen sich ein Aluminium-Schaumkörper verbindet, die in Fig. 5 gezeigt ist unterscheidet sich von der Ausführung der Fertigungsanordnung zur Herstellung von AFS-Platten (Aluminium-Decklagen) vor allem dadurch, dass auf Grund der höheren Formgenauigkeit der Stahl-Decklagen in der Regel eine Kalibrierpresse nicht erforderlich ist, sondern im Anschluss an den Infrarot-Ofen, der grundsätzlich die bereits in Verbindung mit Fig. 1 erläuterten Eigenschaften aufweist, die geschäumte Verbundplatte (AFS-Platte) auf eine Kühlstrecke unter Verwendung eines entsprechenden, in Fig. 7 dargestellten oben erläuterten Kühltunnels umgeben wird, worauf am Ende der Transportstrecke eine Materialentnahme der geschäumten Verbundplatte erfolgt und von dort aus unter Verwendung eines in Fig. 5 dargestellten Rücktransportsystems, wieder zur Eingangsseite des Infrarot-Ofens 5 zurückgeführt werden. Die in den Abbildungen 5 und 6 gezeichnete Fertigungsanordnung ist daher nicht erfindungsmäßig. Die Auflageeinrichtungen für die Vormaterial-Sandwichplatte aus zwei Stahl-Decklagen und Aluminium-Schaumkörperelementen unterscheidet sich von dem Auflagerost für die Herstellung von Verbundplatten mit Aluminium-Decklagen 1 dadurch, dass für die Herstellung von SAS-Verbundplatten (Stahl-geschäumtes Aluminium-Stahl) Auflage- und Einspannroste (siehe Fig. 8b) verwendet werden, d. h. in diesem Fall weisen die Auflageroste Spannmittel auf, um die Vormaterial-Sandwichplatte einzuspannen, um eine homogene metallurgische Verbindung des Aluminium-Schaumes mit den Stahl-Decklagen sicherzustellen.

Figur 8b zeigt für die Fertigung von SAS-Platten (Stahl-Aluminiumschaum-Stahl) einen Schäumform, d. h. ein aus einem Oberrost 3a und einem Unterrost 3b bestehenden Auflagerost, wobei über Bügelelemente 3c in Verbindung mit Abstandshaltern 3d und Verschlusselementen 3e Oberrost 3a und Unterrost 3b kraftschlüssig miteinander unter Zwischenlage einer vorbereiteten Verbundplatte 6 bzw. gegeneinander verspannt werden können. Auf diese Weise wird die vorzugsweise nur mit der unteren Stahldeckplatte heftverschweißte obere Stahlplatte (von z. B. 2 mm Dicke) unter gleichmäßigem Oberflächendruck festgehalten, so dass es nicht zu Verwerfungen oder Verformungen der Deckplatten aus Stahl in Verbindung mit dem Ausschäumprozess kommt, abhängig vom lokalen Ausschäumdruck.

Bei der Fertigung von AFS-Platten (Verbundplatten mit Deckplatten aus Aluminium) kann auf einen Oberrost verzichtet werden, vielmehr "schwimmt" die obere Deckplatte im Rahmen des Fertigungsprozesses unter Ausbildung des Aluminium-Schaumkörpers auf diesem auf, wobei gleichzeitig eine metallurgische Verbindung zwischen Aluminiumschaum und Deckplatte entsteht (siehe Fig. 8a).

Im Übrigen erfolgt der Fertigungsprozess analog zu der obigen Beschreibung einer Herstellung von AFS-Verbundplatten unter Berücksichtigung der veränderten Ausführung der Auflage- und Einspannroste 3 sowie des dispensablen Einsatzes einer Kalibrierpresse.

In Figur 6 ist nochmals eine Gesamtdarstellung des Infrarot-Ofens 5 in Verbindung mit der Materialbereitstellungsposition 4 und der Verbundplatten-Abnahmestation 15 in perspektivischer Darstellung gezeigt.

Es ist vorgesehen AFS-Verbundplatten 6 (Aluminiumdecklage/ Aluminiumschaumkörper / Aluminium-Decklage in Größen von z. B. 3000x1500 mm herzustellen, wobei deren Gesamtdicke vorzugsweise im Bereich von 10 bis 50 mm liegt, bei einer AL-Deckblechdicke zwischen etwa 0,8 und ca. 8,0 mm. Eine Schaumdichte des Aluminiumschaumes in der Verbundplatte wird vorzugsweise im Bereich von ca. 0,4 bis 0,8 g/cm³ sein.

Eine derartige, typische und hier industrielle in einem automatischen Durchlaufverfahren kontinuierlich hergestellte Aluminiumschaum-Verbundplatte (ASF-Platte) hat vorzugsweise folgende physikalische Eigenschaften.

Bei der Herstellung von SAS-Verbundplatten (d. h. aluminiumgeschäumten Platten mit Stahlblech-Decklagen können auch mehrere Platten miteinander verbunden werden, wobei eine Verbindung (metallische Bindung) einzelner Schichten miteinander durch einen Diffusions-Schweiß-Prozess (Verbindung während des Schäumprozesses) erzeugt wird.

Vorzugsweise sind auch für derartige Stahl/Aluminiumschaum/Stahl-Verbundplatten 6 Abmessungen von ca. 3000 x 1500 mm vorgesehen und die Dicke einer Sandwichplatte liegt vorzugsweise im Bereich von 10 bis 50 mm. Eine Dicke der Decklagen (Stahl) beträgt vorzugsweise zwischen 0,8 bis 10,0 mm und eine Dichte des Aluminiumschaumkörpers liegt vorzugsweise im Bereich von ca. 0,5 bis 0,8 g/cm³.

Eine typische derartige Sandwichplatte kann folgende physikalische Eigenschaften aufweisen:
Durch die Erfindung wird erstmals ein automatisiertes Verfahren zur Herstellung von großflächiger Metallschaum-Verbundplatten in einer Fertigungsstraße angegeben und somit eine industrielle Herstellung derartiger Verbundplatten mit Aluminium-Schaumkörpern, sei es mit Aluminium-Decklagen oder mit Stahl-Decklagen möglich, wobei sich derartige Sandwichplatten durch ein verhältnismäßig geringes Gewicht bei hoher Steifigkeit und exzellenten Festigkeitswerten bei großer Ebenheit und hoher Gleichmäßigkeit der Schaumkörperstruktur auszeichnen.

Vorzugsweise wird parallel zu einer Fertigungsstraße zur Herstellung von Aluminium-Schaumplatten (AFS-Platten mit Aluminium-Decklagen) eine weitere Fertigungsstraße zur Herstellung von Stahl-Schaumplatten (Stahlplatten aus Decklagen mit Aluminiumschaum, sog. SAS-Platten) eingerichtet.

## Patentansprüche

1. Verfahren zur kontinuierlichen Herstellung von Metallschaumverbundplatten (6) als Sandwichplatten in einer Fertigungsstraße, mit Decklagen (1) aus Aluminium und einem Metallschaumkörper aus Aluminium zwischen den Decklagen (1), wobei vorgefertigte Sandwichplatten, kontinuierlich durch einen Infrarot-Ofen (5) hindurchgeführt werden, zwischen den Deckplatten (1) eine Vielzahl von Aluminium-Schaumkörperelementen, die aus feinen Aluminiumpartikeln in Verbindung mit Treibmittel bestehen, eingelegt sind und die Sandwichplatten in dem Infrarot-Ofen (5) durch eine Mehrzahl steuerbarer Temperaturzonen geführt werden, wobei die Sandwichplatten mit geometrieabhängig gezieltem Wärmeeintrag bis zur Reaktionstemperatur der Aluminiumschaumkörperelemente erwärmt und für einen vorgegebenen Zeitraum bei einer Stabilisierungstemperatur nahe aber unterhalb der Solidustemperatur der Decklagen (1) gehalten werden, zur homogenen metallischen Verbindung zwischen den Decklagen (1) und einem aus den Aluminium-Schaumkörperelementen gebildeten, geschlossenporigen Aluminiumschaumkörper (2) zwischen diesen, und wobei die Sandwichplatten durch eine Handhabungseinrichtung in eine nachgeordnete In-line-Kalibrierpresse (10) übergeben werden.

2. Verfahren zur kontinuierlichen Herstellung von Metallschaumverbundplatten (6) als Sandwichplatten in einer Fertigungsstraße, mit Decklagen (1) aus Stahl und einem Metallschaumkörper aus Aluminium zwischen den Decklagen (1), wobei vorgefertigte Sandwichplatten, eingelegt in eine Schäumform, kontinuierlich durch einen Infrarot-Ofen (5) hindurchgeführt werden, zwischen den Deckplatten (1) eine Vielzahl von Aluminium-Schaumkörperelementen, die aus feinen Aluminiumpartikeln in Verbindung mit Treibmittel bestehen, eingelegt sind und die Sandwichplatten in dem Infrarot-Ofen (5) durch eine Mehrzahl steuerbarer Temperaturzonen geführt werden, wobei die Sandwichplatten mit geometrieabhängig gezieltem Wärmeeintrag bis zur Reaktionstemperatur der Aluminiumschaumkörperelemente erwärmt und für einen vorgegebenen Zeitraum bei einer Stabilisierungstemperatur nahe aber unterhalb der Solidustemperatur der Decklagen (1) gehalten werden, zur homogenen metallurgischen Verbindung zwischen den Decklagen (1) und einem aus den Aluminium-Schaumkörperelementen gebildeten, geschlossenporigen Aluminiumschaumkörper (2) zwischen diesen.

3. Verfahren nach Anspruch 1 oder 2, **dadurch gekennzeichnet, dass** elektrische Anschlüsse der Infrarot-Strahler des Infrarot-Ofens (5) wassergekühlt werden.

4. Verfahren nach zumindest einem der vorhergehenden Ansprüche 1 bis 3, **dadurch gekennzeichnet, dass** Infrarot-Strahler innerhalb von Schutzrohranordnungen luftgekühlt werden.

5. Verfahren nach zumindest einem der vorhergehenden Ansprüche 1, 3 und 4, **dadurch gekennzeichnet, dass** zur Fertigung von Aluminiumschaum-Verbundplatten eine vorbereitete Plattenanordnung bestehend aus zwei Decklagen (1) und einer Mehrzahl von Aluminiumschaumkörperelementen auf einem Unterrost (3b) als Auflagerost (3) angeordnet werden.

6. Verfahren nach zumindest einem der vorhergehenden Ansprüche 2 bis 4, **dadurch gekennzeichnet, dass** zur Herstellung von SAS-Verbundplatten diese zwischen einem Oberrost (3a) und einem Unterrost (3b) als Auflagerost (3) eingespannt und vor Beginn des Aufschäumprozesses zwischen die Stahl-Decklagen (1) Aluminium-Schaumkörperelemente eingelegt werden.

7. Verfahren nach zumindest einem der vorhergehenden Ansprüche 1 bis 6, **dadurch gekennzeichnet, dass** die Sandwichplatten (6) im Anschluss an ihre Fertigung zwangsgekühlt werden.

8. Fertigungsanordnung, die konfiguriert ist zur kontinuierlichen Herstellung von Metallschaumverbundplatten (6) mit Decklagen (1) aus Stahl oder Aluminium und einem Aluminium-Schaumkörper (3) zwischen diesen in einer Fertigungsstraße gemäß dem Verfahren nach Anspruch 1 oder 2, wobei die Metallschaumverbundplatten (6) mit Decklagen aus Aluminium oder einer Aluminiumlegierung (Aluminiumschaum-Verbundplatten) kontinuierlich in einem Infrarot-Ofen (5) gebildet, in eine nachgeordnete Kalibrierpresse (10) und einen der Kalibrierpresse nachgeordneten Kühltunnel (12) und am Ende der Fertigungsstraße die Metallschaumverbundplatten (6) in eine Entnahmestation geführt sind, wobei der Infrarot-Ofen (5) eine flächendeckende Infrarotstrahleranordnung mit präziser Temperatursteuerung im Bereich von +/- 5 Grad Kelvin mit einer Ansprechzeit von wenigen Sekunden und lokal steuerbarer Leistungssteuerung der Infrarotstrahler aufweist.

## Claims

1. A method for the continuous production of metal foam composite bodies (6) as sandwich panels in a production line, with cover layers (1) of aluminium and a metal foam body of aluminium between the cover layers (1), wherein prefabricated sandwich panels are continuously passed through an infrared oven (5), between the cover plates (1) a plurality of aluminium foam body elements consisting of fine aluminium particles in combination with blowing agent are inserted and the sandwich plates are guided through a plurality of controllable temperature zones in the infrared oven (5), wherein the sandwich panels are heated up to the reaction temperature of the aluminium foam body elements with a heat input which is targeted depending on the geometry and are maintained for a predetermined period of time at a stabilisation temperature close to but below the solidus temperature of the cover layers (1), for homogeneous metallic connection between the cover sheets (1) and a closed-pore aluminium foam body (2) formed from the aluminium foam body elements between them, and wherein the sandwich panels are transferred by a handling device to a downstream in-line calibration press (10).

2. A method for the continuous production of metal foam composite bodies (6) as sandwich panels in a production line, with cover layers (1) of steel and a metal foam body of aluminium between the cover layers (1), wherein prefabricated sandwich panels, inserted in a foaming mould, are continuously passed through an infrared oven (5), between the cover layers (1) a plurality of aluminium foam body elements consisting of fine aluminium particles in combination with blowing agent, and the sandwich panels are guided in the infrared oven (5) through a plurality of controllable temperature zones, wherein the sandwich panels are heated up to the reaction temperature of the aluminium foam body elements with geometry-dependent targeted heat input and are kept for a predetermined period of time at a stabilisation temperature close to but below the solidus temperature of the cover layers (1), for homogeneous metallurgical connection between the cover layers (1) and a closed-pore aluminium foam body (2) formed from the aluminium foam body elements between them.

3. A method according to claim 1 or 2, **characterised in that** electrical connections of the infrared radiators of the infrared oven (5) are water-cooled.

4. A method according to at least one of the preceding claims 1 to 3, **characterised in that** infrared emitters are air-cooled within protective tube arrangements.

5. A method according to at least one of the preceding claims 1, 3 and 4, **characterised in that** for the production of aluminium foam composite bodies a prepared panel arrangement consisting of two cover layers (1) and a plurality of aluminium foam body elements are arranged on a bottom grid (3b) as a support grid (3).

6. A method according to at least one of the preceding claims 2 to 4, **characterised in that** for the manufacture of SAS composite bodies, these are clamped between an upper grating (3a) and a lower grating (3b) as support grating (3) and aluminium foam body elements are inserted between the steel cover layers (1) before the start of the foaming process.

7. A method according to at least one of the preceding claims 1 to 6, **characterised in that** the sandwich panels (6) are forcedly cooled after their manufacture.

8. A manufacturing arrangement configured for the continuous production of metal foam composite bodies (6) with cover layers (1) of steel or aluminium and an aluminium foam body (3) between them in a production line according to the method according to claim 1 or 2, wherein the metal foam composite bodies (6) with cover layers of aluminium or an aluminium alloy (aluminium foam composite bodies) are continuously formed in an infrared oven (5), are fed into a downstream calibrating press (10) and a cooling tunnel (12) downstream of the calibrating press and, at the end of the production line, the metal foam composite bodies (6) are fed into a removal station, the infrared oven (5) having an area-covering infrared radiator arrangement with precise temperature control in the range of +/- 5 degrees Kelvin with a response time of a few seconds and locally controllable power control of the infrared radiators.

## Revendications

1. Procédé pour la fabrication en continu de corps composites en mousse métallique (6) sous forme de panneaux sandwich dans une ligne de production, avec des couches de couverture (1) en aluminium et un corps en mousse métallique en aluminium entre les couches de couverture (1), dans lequel des panneaux sandwich préfabriqués sont passés en continu dans un four à infrarouge (5), entre les plaques de couverture (1) sont insérés plusieurs éléments de corps en mousse d'aluminium constitués de fines particules d'aluminium en combinaison avec un agent gonflant et les plaques sandwich sont guidées dans le four à infrarouge (5) à travers plusieurs zones de température contrôlables, dans lequel les panneaux sandwich sont chauffés à la température de réaction des éléments de corps en mousse d'aluminium avec un apport de chaleur ciblé en fonction de la géométrie et sont maintenus pendant une durée prédéterminée à une température de stabilisation proche mais inférieure à la température de solidus des couches de couverture (1), pour une liaison métallique homogène entre les tôles de couverture (1) et un corps en mousse d'aluminium (2) à pores fermés formé entre elles par les éléments de corps en mousse d'aluminium, et dans lequel les panneaux sandwich sont transférés par un dispositif de manipulation à une presse de calibrage en ligne (10) située en aval.

2. Procédé pour la fabrication en continu de corps composites en mousse métallique (6) sous forme de panneaux sandwich dans une ligne de production, avec des couches de couverture (1) en acier et un corps en mousse métallique d'aluminium entre les couches de couverture (1), dans lequel des panneaux sandwich préfabriqués, insérés dans un moule de moussage, sont passés en continu dans un four à infrarouge (5), entre les couches de couverture (1) une pluralité d'éléments de corps en mousse d'aluminium constitués de fines particules d'aluminium en combinaison avec un agent gonflant, et les panneaux sandwich sont guidés dans le four infrarouge (5) à travers plusieurs zones de température contrôlables, les panneaux sandwich étant chauffés à la température de réaction des éléments de corps en mousse d'aluminium avec un apport de chaleur ciblé dépendant de la géométrie et étant maintenus pendant une durée prédéterminée à une température de stabilisation proche mais inférieure à la température de solidus des couches de couverture (1), pour une liaison métallurgique homogène entre les couches de couverture (1) et un corps en mousse d'aluminium à pores fermés (2) formé par les éléments de corps en mousse d'aluminium entre eux.

3. Procédé selon la revendication 1 ou 2, **caractérisé en ce que** les connexions électriques des radiateurs infrarouges du four infrarouge (5) sont refroidies à l'eau.

4. Procédé selon au moins une des revendications 1 à 3 précédentes, **caractérisé en ce que** les émetteurs infrarouges sont refroidis à l'air à l'intérieur de dispositifs de tubes protecteurs.

5. Procédé selon au moins l'une des revendications 1, 3 et 4 précédentes, **caractérisé en ce que**, pour la fabrication de corps composites en mousse d'aluminium, on dispose sur une grille de fond (3b), en tant que grille de support (3), un agencement de panneaux préparé, constitué de deux couches de couverture (1) et de plusieurs éléments de corps en mousse d'aluminium.

6. Procédé selon au moins une des revendications 2 à 4 précédentes, **caractérisé en ce que** pour la fabrication de corps composites SAS, ceux-ci sont serrés entre une grille supérieure (3a) et une grille inférieure (3b) en tant que grille de support (3) et des éléments de corps en mousse d'aluminium sont insérés entre les couches de couverture (1) en acier avant le début du processus de moussage.

7. Procédé selon au moins une des revendications précédentes 1 à 6, **caractérisé en ce que** les panneaux sandwich (6) sont refroidis de manière forcée après leur fabrication.

8. Dispositif de fabrication conçu pour la fabrication en continu de corps composites en mousse métallique (6) avec des couches de couverture (1) en acier ou en aluminium et un corps en mousse d'aluminium (3) entre eux dans une ligne de production selon le procédé selon la revendication 1 ou 2, les corps composites en mousse métallique (6) avec des couches de couverture en aluminium ou en un alliage d'aluminium (corps composites en mousse d'aluminium) étant formés en continu dans un four à infrarouge (5), sont introduits dans une presse de calibrage (10) et un tunnel de refroidissement (12) en aval de la presse de calibrage et, à la fin de la chaîne de production, les corps composites en mousse métallique (6) sont introduits dans un poste d'enlèvement, le four infrarouge (5) ayant un agencement de radiateurs infrarouges couvrant toute la surface avec un contrôle précis de la température dans la plage de +/- 5 degrés Kelvin avec un temps de réponse de quelques secondes et une commande de puissance des radiateurs infrarouges contrôlable localement.
